(19) 

Europäisches
Patentamt
European
Patent Office
Office européen
des brevets

(11)  **EP 3 778 111 A1**

(12)  **EUROPEAN PATENT APPLICATION**
published in accordance with Art. 153(4) EPC

(43) Date of publication:
**17.02.2021 Bulletin 2021/07**

(21) Application number: **19775708.1**

(22) Date of filing: **26.03.2019**

(51) Int Cl.:
**B23K 35/368** *(2006.01)*      **B23K 35/30** *(2006.01)*
**C22C 38/00** *(2006.01)*       **C22C 38/04** *(2006.01)*

(86) International application number:
**PCT/JP2019/012955**

(87) International publication number:
**WO 2019/189231 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2018 JP 2018065775**

(71) Applicant: **Kabushiki Kaisha Kobe Seiko Sho
(Kobe Steel, Ltd.)
Kobe-shi, Hyogo 651-8585 (JP)**

(72) Inventors:
• **NAGAMI, Masayuki**
  **Kanagawa 251-8551 (JP)**
• **SATO, Koji**
  **Kanagawa 251-8551 (JP)**

(74) Representative: **Müller-Boré & Partner
Patentanwälte PartG mbB
Friedenheimer Brücke 21
80639 München (DE)**

(54)  **FLUX-CORED WIRE**

(57)      Provided is a flux-cored wire having: a steel shell; and a flux contained in the shell. This wire contains 83.0-93.0% of Fe, 5.0-7.0% of $TiO_2$, 0.2-1.0% of Si, 0.02-0.10% of C, 1.0-3.0% of Mn, 0.30-0.70% of Mg, 0.70-3.00% of Ni, 0.50% or less of Cr, 0.10-0.50% of F, and 0.05-0.30% in total of Na and K, on the basis of the total mass of the wire. The shell contains 0.010-0.070% of C, 0.40% or less of Mn, 0.10% or less of Si, 0.10% or less of Ni, 0.10% or less of Cr, 0.0010-0.0050% of N, and 0.0010-0.0075% of O on the basis of the total mass of the shell, with the remainder comprising Fe and inevitable impurities.

EP 3 778 111 A1

**Description**

Technical Field

The present disclosure relates to a flux-cored wire.

Background Art

In the field of offshore structures, the depth of water has been increased in sea areas in which development of energy resources proceeds, the area of resource exploration and mining has been expanded to extreme sea areas such as the Arctic Ocean, and the facilities have been upsized. With such technology trends, higher strength and higher toughness have been required in the design of offshore structures, and higher performance has been required for weld joints.

For welding consumables, flux-cored wires for all-position welding have been demanded from the viewpoint of achieving high efficiency. However, known flux-cored wires for all-position welding provide a weld metal having a high oxygen content. Therefore, if gas-shielded arc welding is performed using such a flux-cored wire, it is difficult to ensure low-temperature toughness at a weld joint.

For example, PTL 1 discloses a flux-cored wire for gas-shielded arc welding in which the contents of metallic Ti and a Ti alloy, the contents of metallic Al and an Al alloy, and the content of V are limited to particular ranges, and the Ti content in a steel sheath is further limited to a particular range. PTL 1 describes that excellent cold cracking resistance and hot cracking resistance, and excellent low-temperature toughness are achieved.

Citation List

Patent Literature

PTL 1: Japanese Unexamined Patent Application Publication No. 2016-78121

Summary of Invention

Technical Problem

As described above, offshore structures have been applied to extreme sea areas and the facilities have been upsized. In a weld such as a weld joint, higher performance has been required in terms of, for example, strength and low-temperature toughness. Therefore, a further improvement is also expected for flux-cored wires.

In view of the foregoing, it is an object of an embodiment according to the present disclosure to provide a flux-cored wire that provides a weld metal having excellent welding workability, good tensile strength, and good low-temperature toughness. Solution to Problem

A flux-cored wire according to an aspect of the present disclosure includes a steel sheath and a flux contained in the sheath, wherein the wire contains, relative to a total mass of the wire, Fe: 83.0 mass% or more and 93.0 mass% or less, $TiO_2$: 5.0 mass% or more and 7.0 mass% or less, Si: 0.2 mass% or more and 1.0 mass% or less, C: 0.02 mass% or more and 0.10 mass% or less, Mn: 1.0 mass% or more and 3.0 mass% or less, Mg: 0.30 mass% or more and 0.70 mass% or less, Ni: 0.70 mass% or more and 3.00 mass% or less, Cr: 0.50 mass% or less, F: 0.10 mass% or more and 0.50 mass% or less, and Na and K in total: 0.05 mass% or more and 0.30 mass% or less, and the sheath contains, relative to a total mass of the sheath, C: 0.010 mass% or more and 0.070 mass% or less, Mn: 0.40 mass% or less, Si: 0.10 mass% or less, Ni: 0.10 mass% or less, Cr: 0.10 mass% or less, N: 0.0010 mass% or more and 0.0050 mass% or less, and O: 0.0010 mass% or more and 0.0075 mass% or less, with the balance of the sheath being Fe and unavoidable impurities.

In the flux-cored wire according to an aspect of the present disclosure, [Mg]/[O] that is a ratio of a Mg content [Mg] of the wire to an oxygen content [O] of the sheath may be 65 or more. The sheath may be seamlessly formed. When [F] represents a F content, [Na] represents a Na content, [K] represents a K content, [Mg] represents a Mg content, and $[TiO_2]$ represents a $TiO_2$ content relative to a total mass of the wire, a formula below may be satisfied.

$$[F]/([Na] + [K] + [Mg]/3 + [TiO_2]/15) \geq 0.05$$

In the flux-cored wire according to an aspect of the present disclosure, the wire may further satisfy at least one of contents of components below relative to a total mass of the wire: $ZrO_2$: 0.50 mass% or less, $Al_2O_3$: 0.50 mass% or less, Mo: 0.50 mass% or less, Cu: 0.50 mass% or less, metallic Ti: 0.25 mass% or less, metallic Al: 0.20 mass% or less, B: 0.0200 mass% or less, and Li: 0.30 mass% or less.

Advantageous Effects of Invention

According to an aspect of the present disclosure, there can be provided a flux-cored wire that provides a weld metal having excellent welding workability, good tensile strength, and good low-temperature toughness.

Description of Embodiments

Hereafter, an embodiment of the present invention will be described in detail. The following embodiment merely illustrates a flux-cored wire for embodying the technical idea of the present invention. The present invention is not limited to flux-cored wires below. The flux-cored wire according to this embodiment is a flux-cored wire obtained by filling a steel sheath with a flux, and the outer diameter of the flux-cored wire is, for example, 0.9 mm or more and 1.6 mm or less. The flux filling ratio can be set to any value as long as the wire contains components that each satisfy the range of the present invention. From the viewpoints of wire drawability and welding workability (e.g., feedability), the flux filling ratio is, for example, 10 mass% or more and 20 mass% or less relative to the total mass of the wire.

The flux-cored wire according to this embodiment (hereafter also simply referred to as a wire) includes a steel sheath and a flux contained in the steel sheath (hereafter also simply referred to as a sheath). The wire contains, relative to the total mass of the wire, Fe: 83.0 mass% or more and 93.0 mass% or less, $TiO_2$: 5.0 mass% or more and 7.0 mass% or less, Si: 0.2 mass% or more and 1.0 mass% or less, C: 0.02 mass% or more and 0.10 mass% or less, Mn: 1.0 mass% or more and 3.0 mass% or less, Mg: 0.30 mass% or more and 0.70 mass% or less, Ni: 0.70 mass% or more and 3.00 mass% or less, Cr: 0.50 mass% or less, F: 0.10 mass% or more and 0.50 mass% or less, and Na and K in total: 0.05 mass% or more and 0.30 mass% or less. The sheath contains, relative to the total mass of the sheath, C: 0.010 mass% or more and 0.070 mass% or less, Mn: 0.40 mass% or less, Si: 0.10 mass% or less, Ni: 0.10 mass% or less, Cr: 0.10 mass% or less, N: 0.0010 mass% or more and 0.0050 mass% or less, and O: 0.0010 mass% or more and 0.0075 mass% or less, with the balance being Fe and unavoidable impurities.

The flux-cored wire according to this embodiment is used for, for example, gas-shielded arc welding, and can be applied to all-position welding. Furthermore, the weld metal to be obtained has excellent low-temperature toughness and tensile strength, which can sufficiently meet the severe performance requirements. Next, the reasons for placing numerical limitations on components contained in the flux-cored wire according to this embodiment will be described.

The iron (Fe) content relative to the total mass of the wire is 83.0 mass% or more and 93.0 mass% or less and preferably 85.0 mass% or more and 92.0 mass% or less. When the Fe content is 83.0 mass% or more, a sufficient deposition amount can be achieved.

The titanium oxide ($TiO_2$) content relative to the total mass of the wire is 5.0 mass% or more and 7.0 mass% or less. $TiO_2$ is a main component of slag. When the $TiO_2$ content is 5.0 mass% or more relative to the total mass of the wire, welding other than flat welding, such as vertical welding or overhead welding, is easily performed, and thus all-position weldability can be ensured. When the $TiO_2$ content is 7.0 mass% or less relative to the total mass of the wire, the amount of $TiO_2$ left as fine particles in the weld metal is reduced, which suppresses the deterioration of the toughness of the weld metal. The $TiO_2$ content is preferably 5.3 mass% or more. The $T_iO_2$ content is preferably 6.8 mass% or less, more preferably 6.5 mass% or less, and further preferably 6.0 mass% or less.

The silicon (Si) content relative to the total mass of the wire is 0.2 mass% or more and 1.0 mass% or less in terms of the total Si amount of Si and Si compounds. Herein, the amount of Si in Si compounds is calculated by converting the amount of each of the Si compounds to the amount of elemental Si. Si has an effect of decreasing the viscosity of a molten pool. Furthermore, $SiO_2$ that has an effect of increasing the fluidity through deoxidation is generated in the molten slag. When the total Si content relative to the total mass of the wire is 0.2 mass% or more, the viscosity of a molten metal is decreased, the wettability with a base material is improved, and the deoxidation effect is sufficiently produced. Thus, formation of blowholes in the weld metal is suppressed. When the Si content is 1.0 mass% or less, the weld metal has a moderate strength, which suppresses the formation of cracks. The Si content is preferably 0.8 mass% or less, more preferably 0.7 mass% or less, and further preferably 0.6 mass% or less.

The carbon (C) content relative to the total mass of the wire is 0.02 mass% or more and 0.10 mass% or less. C has an effect of improving the strength of the weld metal.

When the C content is 0.02 mass% or more relative to the total mass of the wire, the strength of the weld metal is sufficiently improved, which improves the proof stress of the weld metal. When the C content is 0.10 mass% or less, the generation of island martensite in the weld metal is suppressed, which suppresses the deterioration of toughness. The C content is preferably 0.03 mass% or more. The C content is preferably 0.08 mass% or less. Herein, the C content excludes C in $CO_2$ resulting from a carbonate or the like.

The manganese (Mn) content relative to the total mass of the wire is 1.0 mass% or more and 3.0 mass% or less, which is the total amount of Mn contained in the form of Mn and Mn compound. Mn has effects of facilitating the deoxidation of the weld metal and improving the toughness and strength of the weld metal. When the Mn content is 1.0 mass% or more relative to the total mass of the wire, the deoxidation of the weld metal is sufficiently facilitated and the formation of blowholes in the weld metal is suppressed, which suppresses the deterioration of the toughness of the weld metal. When the Mn content is 3.0 mass% or less, a moderate strength of the weld metal is achieved, which suppresses the formation of cracks. The Mn content is preferably 1.2 mass% or more and more preferably 1.4 mass% or more. The Mn content is preferably 2.8 mass% or less and more preferably 2.6 mass% or less.

The magnesium (Mg) content relative to the total mass of the wire is 0.30 mass% or more and 0.70 mass% or less. Mg is an element having a deoxidation effect, and the wire may contain at least one of metallic Mg and a Mg alloy as a Mg source. When the Mg content is 0.30 mass% or more, a sufficient deoxidation effect is produced and the formation of blowholes in the weld metal is suppressed, which suppresses the deterioration of toughness. When the Mg content is 0.70 mass% or less, a moderate strength of the weld metal is achieved, which suppresses the formation of cracks. The Mg content is preferably 0.32 mass% or more, more preferably 0.35 mass% or more, and further preferably 0.40 mass% or more. The Mg content is preferably 0.66 mass% or less and more preferably 0.60 mass% or less.

The nickel (Ni) content relative to the total mass of the wire is 0.70 mass% or more and 3.00 mass% or less. Ni is an element that contributes to ensuring the toughness of the weld metal through matrix strengthening. When the Ni content is 3.00 mass% or less, the occurrence of hot cracking in the weld metal is suppressed. When the Ni content is 0.70 mass% or more, the toughness of the weld metal is improved. The Ni content is preferably 0.85 mass% or more. The Ni content is preferably 2.85 mass% or less and more preferably 2.50 mass% or less. Ni is added in the form of, for example, elemental Ni or an alloy.

The chromium (Cr) content relative to the total mass of the wire is 0.50 mass% or less, preferably 0.45 mass% or less, more preferably 0.40 mass% or less, and further preferably 0.30 mass% or less. The Cr content is, for example, 0.005 mass% or more. Cr is an element that contributes to improving the strength of the weld metal. When the Cr content is 0.50 mass% or less, a moderate strength of the weld metal is achieved, which suppresses the occurrence of cold cracking. When the Cr content is 0.005 mass% or more, the strength of the weld metal is sufficiently improved. Cr is added in the form of, for example, elemental Cr or an alloy.

The fluorine (F) content relative to the total mass of the wire is 0.10 mass% or more and 0.50 mass% or less, preferably 0.30 mass% or less, and more preferably 0.25 mass% or less. F is contained in the wire as a fluoride, and the F content is a content in terms of F contained in the fluoride. The fluoride forms HF as a result of bonding with hydrogen (H) during welding and has an effect of decreasing the amount of diffusible hydrogen in the weld metal. It is sufficient that the wire contains at least one fluoride. Specific examples of the fluoride include $CaF$, $BaF_2$, $NaF$, $K_2SiF_6$, $SrF_2$, $AlF_3$, $MgF_2$, and $LiF$.

When the F content is 0.10 mass% or more relative to the total mass of the wire in terms of F in the fluoride, the amount of diffusible hydrogen in the weld metal is decreased, which readily suppresses the occurrence of cold cracking. When the F content is 0.50 mass% or less, the amount of fumes generated during welding is suppressed and thus good weldability is achieved.

The total content of sodium (Na) and potassium (K) relative to the total mass of the wire is 0.05 mass% or more and 0.30 mass% or less and preferably 0.10 mass% or more. Na and K have an effect of stabilizing an arc. It is sufficient that the wire contains at least one of Na and K. Na and K are contained in the wire as a Na compound and a K compound, respectively. The Na content is a content in terms of Na contained in the Na compound, and the K content is a content in terms of K contained in the K compound. It is sufficient that the wire contains at least one of the Na compound and the K compound. Specific examples of the Na compound include $NaF$, $Na_2O$, and $Na_2CO_3$. Specific examples of the K compound include $K_2O$, $KF$, and $K_2SiF_6$.

When the total content of Na and K, that is, the total of a Na compound content in terms of Na and a K compound content in terms of K is 0.05 mass% or more relative to the total mass of the wire, arc stability is sufficiently provided. When the total content of Na and K is 0.30 mass% or less, the moisture content of the wire is decreased. This decreases the amount of diffusible hydrogen in the weld metal, which readily suppresses the occurrence of cold cracking. Furthermore, excess spread of arc is suppressed and good weldability is achieved. The total content of Na and K is preferably 0.08 mass% or more. The upper limit of the total content of Na and K is preferably 0.26 mass% or less and more preferably 0.20 mass% or less.

The wire may contain zirconium oxide ($ZrO_2$). $ZrO_2$ has an effect of providing a good bead shape. When the wire contains $ZrO_2$, the $ZrO_2$ content relative to the total mass of the wire is, for example, 0.50 mass% or less, preferably 0.30 mass% or less, and more preferably 0.20 mass% or less.

The $ZrO_2$ content is, for example, 0.005 mass% or more. When the $ZrO_2$ content is 0.005 mass% or more, a good bead shape tends to be obtained. When the $ZrO_2$ content is 0.50 mass% or less, the wettability of a bead toe is improved, which suppresses the formation of a convex bead shape.

The wire may contain aluminum oxide ($Al_2O_3$). $Al_2O_3$ has an effect of providing a good bead shape. When the wire contains $Al_2O_3$, the $Al_2O_3$ content relative to the total mass of the wire is, for example, 0.50 mass% or less, preferably 0.30 mass% or less, and more preferably 0.20 mass% or less. The $Al_2O_3$ content is, for example, 0.05 mass% or more and preferably 0.10 mass% or more. When the $Al_2O_3$ content is 0.05 mass% or more, a good bead shape tends to be obtained. When the $Al_2O_3$ content is 0.50 mass% or less, the wettability of a bead toe is improved, which suppresses the formation of a convex bead shape.

The wire preferably contains both $ZrO_2$ and $Al_2O_3$, but may contain only one of them.

The wire may contain molybdenum (Mo). Mo is an element that contributes to improving the strength of the weld metal. When the wire contains Mo, the Mo content relative to the total mass of the wire is, for example, 0.50 mass% or less, preferably 0.45 mass% or less, and more preferably 0.4 mass% or less. The Mo content is, for example, 0.005 mass% or more. When the Mo content is 0.005 mass% or more, a sufficient tensile strength of the weld metal tends to be achieved. When the Mo content is 0.50 mass% or less, a moderate strength of the weld metal is achieved, which readily suppresses the occurrence of cold cracking. Mo is added in the form of, for example, elemental Mo or an alloy.

The wire may contain copper (Cu). Cu is an element that contributes to improving the strength of the weld metal. When the wire contains Cu, the Cu content relative to the total mass of the wire is, for example, 0.50 mass% or less, preferably 0.10 mass% or less, and more preferably 0.05 mass% or less. The Cu content is, for example, 0.005 mass% or more. When the Cu content is 0.005 mass% or more, a sufficient strength of the weld metal is achieved. When the Cu content is 0.50 mass% or less, a moderate strength of the weld metal is achieved, which readily suppresses the occurrence of cold cracking. Furthermore, the occurrence of hot cracking of the weld metal due to microsegregation is further suppressed. Cu is added in the form of, for example, elemental Cu or an alloy.

The wire may contain metallic titanium (Ti) in addition to the titanium oxide. The metallic Ti is added in the form of a metal or an alloy. The metallic Ti is an element that contributes to improving the toughness of the weld metal. When the wire contains metallic Ti, the metallic Ti content relative to the total mass of the wire is, for example, 0.25 mass% or less, preferably 0.20 mass% or less, and more preferably 0.15 mass% or less. The metallic Ti content is, for example, 0.005 mass% or more. When the metallic Ti content is 0.005 mass% or more, a sufficient toughness of the weld metal is achieved. When the metallic Ti content is 0.25 mass% or less, the amount of Ti dissolved in the weld metal is decreased, and TiC precipitation in a reheated zone is suppressed. Thus, a sufficient toughness can be achieved.

The wire may contain metallic aluminum (Al) in addition to the aluminum oxide. The metallic Al is added in the form of a metal or an alloy. The metallic Al is an element that contributes to improving the toughness of the weld metal. When the wire contains metallic Al, the metallic Al content relative to the total mass of the wire is, for example, 0.20 mass% or less, preferably 0.05 mass% or less, and more preferably 0.03 mass% or less. The metallic Al content is, for example, 0.005 mass% or more. When the metallic Al content is 0.005 mass% or more, a sufficient toughness of the weld metal is achieved. When the metallic Al content is 0.20 mass% or less, the generation of coarse oxides in the weld metal is suppressed and thus a sufficient toughness can be achieved.

The wire may contain boron (B). B is added in the form of elemental B or a B compound. B segregates in prior-austenite grain boundaries and suppresses the precipitation of proeutectoid ferrite, and thus has an effect of improving the toughness of the weld metal. The B compound is, for example, Fe-B, Fe-Si-B, $B_2O_3$, or a composite oxide containing $B_2O_3$. When the wire contains B, the B content relative to the total mass of the wire is, for example, 0.0200 mass% or less, preferably 0.0100 mass% or less, and more preferably 0.0090 mass% or less. The B content is, for example, 0.0010 mass% or more. Herein, the B content is a total of the content of elemental B and the B compound content in terms of B. When the B content is 0.0010 mass% or more, a sufficient toughness of the weld metal is achieved. When the B content is 0.0200 mass% or less, the occurrence of hot cracking in the weld metal is suppressed.

The wire may contain lithium (Li). Li is added in the form of elemental Li or a Li compound. Li is an element that contributes to, for example, improving the arc stability and improving the toughness of the weld metal. The Li compound is, for example, a fluoride such as LiF or a composite fluoride such as $BaLiF_3$. When the wire contains Li, the Li content relative to the total mass of the wire is, for example, 0.30 mass% or less, preferably 0.05 mass% or less, and more preferably 0.02 mass% or less. The Li content is, for example, 0.005 mass% or more. Herein, the Li content is a total of the content of elemental Li and the Li compound content in terms of Li. When the Li content is 0.005 mass% or more, the arc stability is further improved, which sometimes further improves the toughness of the weld metal. When the Li content is 0.30 mass% or less, excess generation of spatters during welding is suppressed, which sometimes further improves the welding workability.

The balance in the composition of the wire is unavoidable impurities. Examples of the unavoidable impurities include S, P, Sb, and As. The wire may also contain vanadium (V) and niobium (Nb) that constitute an alloying agent and its compound. The wire may further contain an arc stabilizer, a slag forming agent, and the like.

The wire may contain vanadium (V). V is an element that segregates in grain boundaries and may cause destruction of the grain boundaries. When the wire contains V, the V content relative to the total mass of the wire is, for example, 0.01 mass% or less and preferably 0.005 mass% or less. When the V content is 0.01 mass% or less, the deterioration of the toughness of the weld metal is suppressed.

The wire may contain niobium (Nb). Nb is an alloying agent, but is an element that readily segregates in grain boundaries and may cause destruction of the grain boundaries. When the wire contains Nb, the Nb content relative to the total mass of the wire is, for example, 0.01 mass% or less. When the Nb content is 0.01 mass% or less, the destruction of the grain boundaries is suppressed, which suppresses the deterioration of the toughness of the weld metal.

The wire may contain sulfur (S). Since S sometimes deteriorates the toughness of the weld metal, S is generally treated as a controlled element whose content is reduced. However, S has an effect of improving the wettability of a bead toe and therefore may be actively added. When the wire contains S, the S content relative to the total mass of the wire is, for example, 0.005 mass% or more. The S content is, for example, 0.03 mass% or less. When the S content is 0.005 mass% or more, the wettability of a bead toe is improved. When the S content is 0.03 mass% or less, the deterioration of the hot cracking resistance of the weld metal is suppressed.

The wire may contain phosphorus (P). P is an unavoidable impurity, and the P content relative to the total mass of the wire is, for example, 0.03 mass% or less. When the P content is 0.03 mass% or less, the deterioration of the hot cracking resistance of the weld metal is suppressed.

The sheath is a steel sheath containing particular trace elements in particular amounts, with the balance being Fe and unavoidable impurities. The elements contained in the sheath are less consumptive during welding than elements contained in the flux, and thus considerably affect the weld metal in general. Therefore, the trace elements contained in the sheath are defined as follows. The content of each element in the sheath is provided relative to the total mass of the sheath.

The nitrogen (N) content in the sheath is 0.0010 mass% or more and 0.0050 mass% or less. The oxygen (O) content is 0.0010 mass% or more and 0.0075 mass% or less.

If the nitrogen content is more than 0.0050 mass%, the toughness of the weld metal, in particular, the toughness at low temperature deteriorates. If the oxygen content is more than 0.0075 mass%, the toughness of the weld metal, in particular, the toughness at low temperature deteriorates.

Herein, the nitrogen content is preferably 0.0045 mass% or less and more preferably 0.0040 mass% or less. The oxygen content is preferably 0.0070 mass% or less, more preferably 0.0060 mass% or less, and further preferably 0.0050 mass% or less. The oxygen and nitrogen contents in the sheath are measured with, for example, a commercially available oxygen/nitrogen analyzer.

The carbon (C) content in the sheath is 0.010 mass% or more and 0.070 mass% or less. When the C content in the sheath is 0.010 mass% or more, the strength of the weld metal is sufficiently improved and the proof stress tends to be improved. When the C content is 0.070 mass% or less, the generation of island martensite in the weld metal is suppressed, which suppresses the deterioration of toughness. The C content in the sheath is preferably 0.060 mass% or less, more preferably 0.050 mass% or less, and further preferably 0.040 mass% or less.

The manganese (Mn) content in the sheath is 0.40 mass% or less and preferably 0.30 mass% or less. The lower limit of the manganese content is, for example, 0.10 mass% or more and preferably 0.20 mass% or more. When the Mn content is 0.10 mass% or more, the strength of the weld metal is improved. Furthermore, the formation of blowholes in the weld metal is suppressed, which suppresses the deterioration of the toughness of the weld metal. When the Mn content is 0.40 mass% or less, the formation of cracks in the weld metal tends to be suppressed.

The silicon (Si) content in the sheath is 0.10 mass% or less and preferably 0.05 mass% or less. The lower limit of the silicon content is, for example, 0.005 mass% or more and preferably 0.008 mass% or more. When the Si content in the sheath is 0.005 mass% or more, the increase in the viscosity of molten metal is suppressed. This improves the wettability with a base material and also produces a sufficient deoxidation effect, which suppresses the formation of blowholes in the weld metal. When the Si content in the sheath is 0.10 mass% or less, the formation of cracks in the weld metal tends to be suppressed.

The nickel (Ni) content in the sheath is 0.10 mass% or less, preferably 0.05 mass% or less, and more preferably 0.02 mass% or less. The Ni content is preferably 0.005 mass% or more. When the Ni content is 0.10 mass% or less, the occurrence of hot cracking in the weld metal is suppressed. When the Ni content is 0.005 mass% or more, the toughness of the weld metal is improved.

The chromium (Cr) content relative to the total mass of the sheath is 0.10 mass% or less, preferably 0.05 mass% or less, and more preferably 0.02 mass% or less. The Cr content is, for example, 0.005 mass% or more. When the Cr content is 0.10 mass% or less, a moderate strength of the weld metal is achieved, which suppresses the occurrence of cold cracking. When the Cr content is 0.005 mass% or more, the strength of the weld metal is sufficiently improved.

The balance in the composition of the sheath is iron (Fe) serving as a main component and unavoidable impurities such as Al, Ti, P, and S. When the sheath contains, for example, Al, Ti, P, and S, each of the contents thereof is, for example, 0.03 mass% or less.

The ratio [Mg]/[O] that is a ratio of the Mg content [Mg] of the wire to the oxygen content [O] of the sheath is, for example, 65 or more, preferably 70 or more, and more preferably 75 or more. The upper limit of the ratio [Mg]/[O] is, for example, 230 or less. When the ratio [Mg]/[O] is 65 or more, the low-temperature toughness tends to be further improved. This is probably because, for example, the content of an oxygen element that deteriorates the low-temperature toughness when left in the weld metal is reduced by Mg that functions as a deoxidizer.

For the wire, the sheath is preferably formed without a seam. That is, the sheath is preferably formed seamlessly.

When the sheath is seamlessly formed, the moisture absorption of the flux contained in the sheath from the outside is suppressed. This can decrease the amount of diffusible hydrogen in the weld metal and can improve the hydrogen embrittlement resistance.

When [F] represents a content of the fluoride in terms of F, [Na] represents a content of the Na component in terms of Na, [K] represents a content of the K component in terms of K, [Mg] represents a content of the Mg component in terms of Mg, and [$TiO_2$] represents a $TiO_2$ content relative to the total mass of the wire, the composition of the wire satisfies a relationship represented by formula 1 below.

$$\text{Formula 1} \quad [F]/([Na] + [K] + [Mg]/3 + [TiO_2]/15) \geq 0.05$$

The formula 1 represents a ratio of the content of a fluorine element to the contents of elements involved in hygroscopicity of the wire. When the ratio satisfies a particular relationship, the amount of diffusible hydrogen in the weld metal is sufficiently decreased, and excellent low-temperature toughness can be achieved. The lower limit in the formula 1 is, for example, 0.05 or more and preferably 0.10 or more. The upper limit in the formula 1 is, for example, 1.0 or less.

The low-temperature toughness of a weld metal formed by using the wire can be evaluated by, for example, Charpy absorbed energy and percent brittle fracture by Charpy test in a low-temperature environment. The Charpy absorbed energy at -60°C is, for example, 70 J or more and preferably 75 J or more. The percent brittle fracture by Charpy test at -60°C is, for example, 40% or less, preferably 38% or less, more preferably 35% or less, and further preferably 30% or less.

The flux-cored wire can be produced by, for example, the following method. A steel strip to constitute a sheath is formed into a U-shaped open tube through a forming roll while being fed in the longitudinal direction. The sheath is filled with a flux prepared by mixing an oxide, a metal or alloy, an Fe powder, and the like in predetermined amounts to achieve a predetermined chemical composition. The cross section is then processed into a circular section. Welding or the like can also be performed on a seam of the sheath to form a seamless sheath. Subsequently, wire drawing is performed by cold working to provide a wire diameter of, for example, 1.0 mm or more and 2.0 mm or less. Note that annealing may be performed during the cold working.

Examples

Hereafter, advantageous effects of the embodiment according to the present disclosure will be specifically described based on Examples and Comparative Examples. In Examples, a tubular sheath formed of a carbon steel having a composition listed in Table 1 below was filled with a flux to produce a flux-cored wire (diameter 1.2 mm) in each of Examples and Comparative Examples. The balance of the components in the carbon steel used for forming the sheath in Table 1 below is Fe and unavoidable impurities. At this time, the flux filling ratio was set within the range of 12.5 mass% or more and 14.5 mass% or less relative to the total mass of the wire.

[Table 1]

| Contents of components in carbon steel used for forming sheath (mass%) | | | | | | | | | | |
|---|---|---|---|---|---|---|---|---|---|---|
| C | Si | Mn | P | S | Cu | Ni | Cr | Ti | Al | B |
| ≤0.10 | ≤0.10 | 0.10-0.90 | ≤0.03 | ≤0.03 | ≤0.20 | | | ≤0.05 | ≤0.05 | ≤0.005 |

Table 2 below shows the composition of the entire flux-cored wire and the composition of the sheath in each of Examples and Comparative Examples. The wire components are provided relative to the total mass of the wire. The sheath components are provided relative to the total mass of the sheath. The balance of the wire components in Table 2 below is unavoidable impurities. The balance of the sheath components is Fe and unavoidable impurities. Table 2 also shows the presence or absence of a seam of the sheath at the cross section of the wire, [Mg]/[O], and the value in the formula 1. No. 1 to No. 15 correspond to Examples that are within the scope of the embodiment. No. 16 to No. 22 correspond to Comparative Examples that are outside the scope of the embodiment.

[Table 2]

| No. | Wire component (mass%) | | | | | | | | | | | | | | | | | | Sheath component (mass%) | | | | | | | | | | Seam at section | [Mg]/[O] | Formula 1 |
|---|---|---|---|---|---|---|---|---|---|---|---|---|---|---|---|---|---|---|---|---|---|---|---|---|---|---|---|---|---|---|---|
| | Fe | TiO$_2$ | Si | C | Mn | Mg | Ni | Cr | F | Na+K | ZrO$_2$ | Al$_2$O$_3$ | Mo | Cu | Metallic Ti | Metallic Al | B | Li | C | Mn | Si | Ni | Cr | P | S | Al | O | N | | | |
| 1 | 87.5 | 5.6 | 0.4 | 0.10 | 2.6 | 0.47 | 2.44 | <0.01 | 0.27 | 0.08 | 0.06 | 0.10 | 0.14 | <0.01 | <0.01 | 0.01 | 0.0032 | <0.01 | 0.012 | 0.27 | 0.03 | 0.01 | 0.01 | 0.006 | 0.003 | 0.019 | 0.0030 | 0.0025 | absence | 157 | 0.45 |
| 2 | 87.5 | 6.7 | 0.5 | 0.04 | 2.7 | 0.46 | 0.88 | <0.01 | 0.16 | 0.16 | <0.01 | 0.13 | 0.41 | <0.01 | 0.14 | 0.02 | 0.0079 | <0.01 | 0.024 | 0.21 | 0.01 | 0.01 | 0.01 | 0.007 | 0.003 | 0.017 | 0.0044 | 0.0040 | absence | 105 | 0.21 |
| 3 | 86.7 | 6.9 | 0.3 | 0.05 | 2.0 | 0.48 | 2.49 | <0.01 | 0.16 | 0.15 | <0.01 | 0.13 | 0.21 | <0.01 | 0.15 | 0.01 | 0.0053 | <0.01 | 0.012 | 0.27 | 0.03 | 0.01 | 0.01 | 0.006 | 0.003 | 0.019 | 0.0030 | 0.0025 | absence | 160 | 0.21 |
| 4 | 88.6 | 5.3 | 0.4 | 0.07 | 1.9 | 0.47 | 2.00 | <0.01 | 0.15 | 0.16 | 0.06 | 0.11 | <0.01 | <0.01 | 0.14 | 0.01 | 0.0106 | <0.01 | 0.012 | 0.27 | 0.03 | 0.01 | 0.01 | 0.006 | 0.003 | 0.019 | 0.0030 | 0.0025 | absence | 157 | 0.23 |
| 5 | 88.1 | 6.9 | 0.3 | 0.03 | 2.0 | 0.50 | 0.86 | 0.29 | 0.16 | 0.16 | <0.01 | 0.13 | 0.19 | <0.01 | 0.13 | 0.01 | 0.0088 | <0.01 | 0.024 | 0.21 | 0.01 | 0.01 | 0.01 | 0.007 | 0.003 | 0.017 | 0.0044 | 0.0040 | absence | 114 | 0.20 |
| 6 | 89.1 | 5.6 | 0.4 | 0.05 | 1.5 | 0.47 | 2.03 | <0.01 | 0.11 | 0.12 | 0.06 | 0.11 | <0.01 | <0.01 | 0.14 | 0.01 | 0.0084 | <0.01 | 0.012 | 0.27 | 0.03 | 0.01 | 0.01 | 0.006 | 0.003 | 0.019 | 0.0030 | 0.0025 | absence | 157 | 0.17 |
| 7 | 89.6 | 5.4 | 0.5 | 0.06 | 1.7 | 0.47 | 1.42 | <0.01 | 0.11 | 0.12 | 0.1 | 0.06 | <0.01 | <0.01 | 0.14 | 0.01 | 0.0084 | <0.01 | 0.024 | 0.21 | 0.01 | 0.01 | 0.01 | 0.007 | 0.003 | 0.017 | 0.0044 | 0.0040 | absence | 107 | 0.17 |
| 8 | 89.9 | 5.5 | 0.5 | 0.04 | 2.0 | 0.40 | 0.91 | <0.01 | 0.10 | 0.12 | 0.1 | 0.06 | <0.01 | <0.01 | <0.01 | 0.01 | 0.0106 | <0.01 | 0.012 | 0.27 | 0.03 | 0.01 | 0.01 | 0.006 | 0.003 | 0.019 | 0.0030 | 0.0025 | absence | 133 | 0.16 |
| 9 | 88.0 | 5.6 | 0.3 | 0.04 | 1.8 | 0.47 | 2.84 | <0.01 | 0.11 | 0.12 | <0.01 | 0.11 | <0.01 | <0.01 | <0.01 | 0.01 | 0.0084 | 0.03 | 0.012 | 0.27 | 0.03 | 0.01 | 0.01 | 0.006 | 0.003 | 0.019 | 0.0030 | 0.0025 | absence | 157 | 0.17 |
| 10 | 89.6 | 5.6 | 0.5 | 0.05 | 1.2 | 0.32 | 1.52 | <0.01 | 0.12 | 0.19 | 0.1 | 0.06 | <0.01 | <0.01 | 0.15 | 0.01 | 0.0088 | <0.01 | 0.024 | 0.21 | 0.01 | 0.01 | 0.01 | 0.007 | 0.003 | 0.017 | 0.0044 | 0.0040 | absence | 73 | 0.17 |
| 11 | 89.9 | 5.5 | 0.4 | 0.04 | 1.4 | 0.66 | 0.90 | <0.01 | 0.10 | 0.12 | 0.1 | 0.07 | <0.01 | <0.01 | <0.01 | 0.01 | 0.0106 | <0.01 | 0.012 | 0.27 | 0.03 | 0.01 | 0.01 | 0.006 | 0.003 | 0.019 | 0.0030 | 0.0025 | absence | 220 | 0.14 |
| 12 | 89.0 | 6.0 | 0.4 | 0.06 | 1.5 | 0.48 | 1.98 | <0.01 | 0.12 | 0.13 | 0.3 | 0.11 | <0.01 | <0.01 | 0.14 | 0.01 | 0.0080 | <0.01 | 0.032 | 0.20 | 0.01 | 0.01 | 0.01 | 0.010 | 0.005 | 0.022 | 0.0071 | 0.0042 | absence | 68 | 0.17 |
| 13 | 89.0 | 6.7 | 0.4 | 0.06 | 1.5 | 0.66 | 2.44 | <0.01 | 0.10 | 0.29 | 0.1 | 0.11 | <0.01 | <0.01 | 0.14 | 0.01 | 0.0110 | <0.01 | 0.032 | 0.20 | 0.01 | 0.01 | 0.01 | 0.010 | 0.005 | 0.022 | 0.0071 | 0.0042 | absence | 93 | 0.10 |
| 14 | 87.3 | 5.6 | 0.4 | 0.10 | 2.6 | 0.50 | 2.40 | <0.01 | 0.36 | 0.26 | 0.06 | 0.10 | 0.15 | <0.01 | <0.01 | 0.01 | 0.0032 | <0.01 | 0.012 | 0.27 | 0.03 | 0.01 | 0.01 | 0.006 | 0.003 | 0.019 | 0.0030 | 0.0025 | absence | 167 | 0.45 |
| 15 | 88.8 | 6.1 | 0.8 | 0.05 | 1.5 | 0.66 | 2.04 | <0.01 | 0.10 | 0.09 | 0.1 | 0.18 | <0.01 | <0.01 | 0.14 | 0.01 | 0.0080 | <0.01 | 0.032 | 0.20 | 0.01 | 0.01 | 0.01 | 0.010 | 0.005 | 0.022 | 0.0071 | 0.0042 | presence | 93 | 0.14 |
| 16 | 89.0 | 6.1 | 0.3 | 0.05 | 1.5 | 0.53 | 2.04 | <0.01 | 0.03 | 0.39 | 0.1 | 0.18 | <0.01 | <0.01 | 0.14 | 0.01 | 0.0080 | <0.02 | 0.032 | 0.20 | 0.01 | 0.01 | 0.01 | 0.010 | 0.005 | 0.022 | 0.0071 | 0.0042 | absence | 75 | 0.03 |
| 17 | 87.4 | 5.6 | 0.4 | 0.10 | 2.6 | 0.50 | 2.49 | <0.01 | 0.27 | 0.08 | 0.06 | 0.10 | 0.14 | <0.01 | <0.01 | 0.01 | 0.0032 | <0.01 | 0.034 | 0.19 | 0.01 | 0.01 | 0.01 | 0.015 | 0.010 | 0.025 | 0.0088 | 0.0055 | absence | 57 | 0.44 |
| 18 | 87.4 | 5.5 | 0.4 | 0.10 | 2.6 | 0.49 | 2.49 | <0.01 | 0.52 | 0.39 | 0.06 | 0.10 | 0.14 | <0.01 | <0.01 | 0.01 | 0.0032 | <0.01 | 0.012 | 0.27 | 0.03 | 0.01 | 0.01 | 0.006 | 0.003 | 0.019 | 0.0030 | 0.0025 | absence | 163 | 0.57 |
| 19 | 87.5 | 5.6 | 0.4 | 0.12 | 2.6 | 0.47 | 3.15 | <0.01 | 0.27 | 0.08 | 0.06 | 0.10 | 0.14 | <0.01 | <0.01 | 0.01 | 0.0032 | <0.01 | 0.012 | 0.27 | 0.03 | 0.01 | 0.01 | 0.006 | 0.003 | 0.019 | 0.0030 | 0.0025 | absence | 157 | 0.45 |
| 20 | 89.9 | 4.8 | 0.4 | 0.08 | 0.9 | 0.24 | 0.90 | <0.01 | 0.10 | 0.12 | 0.1 | 0.07 | <0.01 | <0.01 | <0.01 | 0.01 | 0.0106 | <0.01 | 0.012 | 0.27 | 0.03 | 0.01 | 0.01 | 0.006 | 0.003 | 0.019 | 0.0030 | 0.0025 | absence | 80 | 0.19 |
| 21 | 89.6 | 5.4 | 0.5 | 0.04 | 2.0 | 0.47 | 0.60 | <0.01 | 0.06 | 0.08 | 0.1 | 0.06 | <0.01 | <0.01 | 0.14 | 0.01 | 0.0084 | <0.01 | 0.024 | 0.21 | 0.01 | 0.01 | 0.01 | 0.007 | 0.003 | 0.017 | 0.0044 | 0.0040 | absence | 107 | 0.10 |
| 22 | 89.6 | 5.4 | 0.5 | 0.06 | 1.7 | 0.47 | 1.42 | <0.01 | 0.06 | 0.03 | 0.1 | 0.06 | <0.01 | <0.01 | 0.14 | 0.01 | 0.0084 | <0.01 | 0.024 | 0.21 | 0.01 | 0.01 | 0.01 | 0.007 | 0.003 | 0.017 | 0.0044 | 0.0040 | absence | 107 | 0.11 |

Subsequently, gas-shielded arc welding was performed on a base material shown in Table 3 below using the flux-cored wire in each of Examples and Comparative Examples. The balance of the composition of the base material shown in Table 3 below is Fe and unavoidable impurities.

[Table 3]

| Base material | Sheet thickness (mm) | Composition (mass%) | | | | |
|---|---|---|---|---|---|---|
| | | C | Si | Mn | P | S |
| JIS G3106 SM490A | 20 | 0.14 | 0.17 | 1.08 | 0.01 | 0.001 |

The welding conditions are as follows.

- Shielding gas: 80%Ar-20%$CO_2$, 25 L/min
- Wire diameter: $\phi$1.2 mm
- Welding position: flat position
- Groove shape: V groove
- Groove angle: 20°
- Groove gap: 16 mm
- Welding current: 280 A
- Arc voltage: 29 V
- Welding speed: 350 mm/min

For the weld metal obtained by gas-shielded arc welding using the flux-cored wire in each of Examples and Comparative Examples, the mechanical properties and the amount of diffusible hydrogen were evaluated by the following methods.

<Mechanical properties>

The mechanical properties of the weld metal were evaluated by a tensile test and an impact test conforming to "Methods of tension and impact tests for deposited metal" in JIS Z 3111:2005. For yield stress (YS), a weld metal having a yield stress of 460 MPa or more was evaluated as "Pass". For tensile strength (TS), a weld metal having a tensile strength of 570 MPa or more and 850 MPa or less was evaluated as "Pass". For low-temperature toughness, a weld metal having a Charpy absorbed energy at -60°C of 70 J or more and a percent brittle fracture by Charpy test at -60°C of 40% or less was evaluated as "Pass".

<Amount of diffusible hydrogen>

The amount of diffusible hydrogen in the weld metal was evaluated by a method conforming to JIS Z 3118:2007 using a wire left to stand in an environment of 30°C and 80%RH for one week. As a result, a weld metal having an amount of diffusible hydrogen of 5 ml/100g or less was evaluated as "Pass".

<Welding workability>

The welding workability was evaluated based on the following criteria by performing vertical-up fillet welding on the base material shown in Table 3 above. As a result, when a convex portion had a height of less than 2 mm with respect to a smooth fillet bead, an evaluation result of "A" was given. When the convex portion had a height of 2 mm or more and less than 3 mm, an evaluation result of "B" was given. When the convex portion had a height of 3 mm or more or welding failed because of sagging of a molten metal, an evaluation result of "C" was given. For the amount of spatters and the amount of fumes, when welding workability was inhibited from the viewpoints of the deposition amount on the base material and the difficulty in seeing welding arc, an evaluation result of "C" was also given. An evaluation result of "A" was regarded as "Pass".

The welding conditions are as follows.

- Shielding gas: 80%Ar-20%$CO_2$, 25 L/min
- Wire diameter: $\phi$1.2 mm
- Groove gap: 0 mm
- Welding current: 220 A

- Arc voltage: 24 V
- Welding speed: 150 mm/min
- Weaving width: 10 mm

Table 4 below shows the above results.

[Table 4]

| No. | Evaluation item | | | | | | |
|---|---|---|---|---|---|---|---|
| | YS (MPa) | TS (MPa) | EL (%) | Absorbed energy at -60°C (J) | Percent brittle fracture at -60°C (%) | Diffusible hydrogen after one-week moisture absorption (ml/100g) | Workability |
| 1 | 739 | 808 | 22 | 83 | 13 | 2.8 | A |
| 2 | 663 | 739 | 21 | 72 | 25 | 3.7 | A |
| 3 | 611 | 677 | 23 | 98 | 21 | 3.9 | A |
| 4 | 578 | 646 | 24 | 115 | 19 | 3.9 | A |
| 5 | 560 | 616 | 27 | 75 | 40 | 3.2 | A |
| 6 | 510 | 587 | 30 | 112 | 26 | 3.8 | A |
| 7 | 558 | 626 | 27 | 94 | 29 | 4.5 | A |
| 8 | 517 | 582 | 29 | 142 | 16 | 4.4 | A |
| 9 | 504 | 580 | 34 | 92 | 26 | 3.4 | A |
| 10 | 520 | 591 | 28 | 99 | 21 | 3.8 | A |
| 11 | 539 | 605 | 29 | 101 | 25 | 4.5 | A |
| 12 | 507 | 581 | 30 | 76 | 38 | 3.8 | A |
| 13 | 534 | 611 | 29 | 85 | 31 | 4.7 | A |
| 14 | 725 | 799 | 22 | 85 | 13 | 3.1 | A |
| 15 | 516 | 610 | 29 | 72 | 40 | 7.3 | A |
| 16 | 510 | 601 | 29 | 75 | 37 | 7.5 | C |
| 17 | 711 | 797 | 23 | 60 | 35 | 3.5 | A |
| 18 | 721 | 805 | 23 | 85 | 11 | 2.8 | C |
| 19 | 820 | 869 | 17 | 35 | 56 | 4.1 | A |
| 20 | 457 | 541 | 33 | 74 | 40 | 3.9 | C |
| 21 | 499 | 565 | 30 | 85 | 25 | 4.5 | A |
| 22 | 537 | 610 | 27 | 91 | 27 | 4.1 | C |

As shown in Table 4, the flux-cored wires of No. 1 to No. 15 in which the contents of an oxygen element and a nitrogen element in the sheath and the contents of other components are within the ranges of the embodiment according to the present disclosure had good tensile strength and excellent low-temperature toughness and workability. In the flux-cored wire of No. 15 having a sheath with a seam, the amount of diffusible hydrogen was large.

The flux-cored wire of No. 16 in which the total content of sodium and potassium in the entire wire exceeds the range of the embodiment according to the present disclosure had poor workability because of excess spread of arc. The flux-cored wire of No. 16 in which the fluorine content in the entire wire falls below the range of the embodiment according to the present disclosure did not satisfy the relationship of the formula 1, and thus the amount of diffusible hydrogen was large.

The flux-cored wire of No. 17 in which the oxygen and nitrogen contents in the sheath are outside the ranges of the embodiment according to the present disclosure and the ratio of the Mg content in the entire wire to the oxygen content in the sheath is less than 65 had poor low-temperature toughness.

The flux-cored wire of No. 18 in which the fluorine content in the entire wire exceeds the range of the embodiment according to the present disclosure had poor workability because of a large amount of fumes. Furthermore, the flux-cored wire of No. 18 in which the total content of sodium and potassium in the entire wire exceeds the range of the embodiment according to the present disclosure had poor workability because of excess spread of arc.

The flux-cored wire of No. 19 in which the carbon content in the entire wire exceeds the range of the embodiment according to the present disclosure and the nickel content in the entire wire exceeds the range of the embodiment according to the present disclosure had poor low-temperature toughness because of tensile strength that was higher than required.

The flux-cored wire of No. 20 in which the titanium oxide content in the entire wire falls below the range of the embodiment according to the present disclosure had poor workability. Furthermore, the flux-cored wire of No. 20 in which the manganese content and the magnesium content in the entire wire fall below the ranges of the embodiment according to the present disclosure had poor tensile strength.

The flux-cored wire of No. 21 in which the nickel content in the entire wire falls below the range of the embodiment according to the present disclosure had poor tensile strength.

The flux-cored wire of No. 22 in which the total content of sodium and potassium in the entire wire falls below the range of the embodiment according to the present disclosure had poor workability because of low arc stability.

This application claims priority from Japanese Patent Application No. 2018-065775 filed March 29, 2018, the entire contents of which are hereby incorporated by reference. All the documents, patent applications, and technical standards mentioned in the present specification are incorporated herein by reference to the same extent as in the case where the documents, patent applications, and technical standards are each specifically and individually described as being incorporated herein by reference.

## Claims

1. A flux-cored wire comprising a steel sheath and a flux contained in the sheath, wherein the wire contains, relative to a total mass of the wire:

   Fe: 83.0 mass% or more and 93.0 mass% or less,
   $TiO_2$: 5.0 mass% or more and 7.0 mass% or less,
   Si: 0.2 mass% or more and 1.0 mass% or less,
   C: 0.02 mass% or more and 0.10 mass% or less,
   Mn: 1.0 mass% or more and 3.0 mass% or less,
   Mg: 0.30 mass% or more and 0.70 mass% or less,
   Ni: 0.70 mass% or more and 3.00 mass% or less,
   Cr: 0.50 mass% or less,
   F: 0.10 mass% or more and 0.50 mass% or less, and
   Na and K in total: 0.05 mass% or more and 0.30 mass% or less, and
   the sheath contains, relative to a total mass of the sheath:

   C: 0.010 mass% or more and 0.070 mass% or less,
   Mn: 0.40 mass% or less,
   Si: 0.10 mass% or less,
   Ni: 0.10 mass% or less,
   Cr: 0.10 mass% or less,
   N: 0.0010 mass% or more and 0.0050 mass% or less, and
   O: 0.0010 mass% or more and 0.0075 mass% or less, with the balance of the sheath being Fe and unavoidable impurities.

2. The flux-cored wire according to Claim 1, wherein [Mg]/[O] that is a ratio of a Mg content [Mg] of the wire to an oxygen content [0] of the sheath is 65 or more.

3. The flux-cored wire according to Claim 1 or 2, wherein the sheath is seamlessly formed.

4. The flux-cored wire according to Claim 1 or 2, wherein when [F] represents a F content, [Na] represents a Na content, [K] represents a K content, [Mg] represents a Mg content, and $[TiO_2]$ represents a $TiO_2$ content relative to a total mass of the wire, a formula below is satisfied,

$$[F]/([Na] + [K] + [Mg]/3 + [TiO_2]/15) \geq 0.05.$$

5. The flux-cored wire according to Claim 3, wherein when [F] represents a F content, [Na] represents a Na content, [K] represents a K content, [Mg] represents a Mg content, and [TiO$_2$] represents a TiO$_2$ content relative to a total mass of the wire, a formula below is satisfied,

$$[F]/([Na] + [K] + [Mg]/3 + [TiO_2]/15) \geq 0.05.$$

6. The flux-cored wire according to Claim 1 or 2, wherein the wire further satisfies at least one of contents of components below relative to a total mass of the wire:

    ZrO$_2$: 0.50 mass% or less,
    Al$_2$O$_3$: 0.50 mass% or less,
    Mo: 0.50 mass% or less,
    Cu: 0.50 mass% or less,
    metallic Ti: 0.25 mass% or less,
    metallic Al: 0.20 mass% or less,
    B: 0.0200 mass% or less, and
    Li: 0.30 mass% or less.

7. The flux-cored wire according to Claim 3, wherein the wire further satisfies at least one of contents of components below relative to a total mass of the wire:

    ZrO$_2$: 0.50 mass% or less,
    Al$_2$O$_3$: 0.50 mass% or less,
    Mo: 0.50 mass% or less,
    Cu: 0.50 mass% or less,
    metallic Ti: 0.25 mass% or less,
    metallic Al: 0.20 mass% or less,
    B: 0.0200 mass% or less, and
    Li: 0.30 mass% or less.

8. The flux-cored wire according to Claim 4, wherein the wire further satisfies at least one of contents of components below relative to a total mass of the wire:

    ZrO$_2$: 0.50 mass% or less,
    Al$_2$O$_3$: 0.50 mass% or less,
    Mo: 0.50 mass% or less,
    Cu: 0.50 mass% or less,
    metallic Ti: 0.25 mass% or less,
    metallic Al: 0.20 mass% or less,
    B: 0.0200 mass% or less, and
    Li: 0.30 mass% or less.

9. The flux-cored wire according to Claim 5, wherein the wire further satisfies at least one of contents of components below relative to a total mass of the wire:

    ZrO$_2$: 0.50 mass% or less,
    Al$_2$O$_3$: 0.50 mass% or less,
    Mo: 0.50 mass% or less,
    Cu: 0.50 mass% or less,
    metallic Ti: 0.25 mass% or less,
    metallic Al: 0.20 mass% or less,
    B: 0.0200 mass% or less, and
    Li: 0.30 mass% or less.

**INTERNATIONAL SEARCH REPORT**

International application No.

PCT/JP2019/012955

### A. CLASSIFICATION OF SUBJECT MATTER
Int.Cl. B23K35/368(2006.01)i, B23K35/30(2006.01)i, C22C38/00(2006.01)n, C22C38/04(2006.01)n

According to International Patent Classification (IPC) or to both national classification and IPC

### B. FIELDS SEARCHED
Minimum documentation searched (classification system followed by classification symbols)
Int.Cl. B23K35/368, B23K35/30, C22C38/00, C22C38/04

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2017/038609 A1 (KOBE STEEL, LTD.) 09 March 2017 & US 2018/0326544 A1 & EP 3342530 A1 & CN 107921589 A & KR 10-2018-0033574 A | 1-9 |
| A | JP 8-174267 A (NIPPON STEEL CORPORATION) 09 July 1996 (Family: none) | 1-9 |
| A | JP 4-224094 A (NIPPON STEEL CORPORATION) 13 August 1992 (Family: none) | 1-9 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05.06.2019 | 18.06.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016078121 A

- JP 2018065775 A